# EUROPÄISCHE PATENTSCHRIFT

(11) **EP 1 520 975 B1**
(45) Veröffentlichungstag und Bekanntmachung des Hinweises auf die Patenterteilung: **02.11.2011**
(21) Anmeldenummer: 04104750.7
(22) Anmeldetag: 29.09.2004
(51) Int. Cl.: F02M 35/024

(54) **Luftfilteranlage im Ansaugtrakt einer Brennkraftmaschine**
Air filter apparatus in the intake system of an internal combustion engine
Filtre à air dans un système d'admission pour un moteur à combustion interne

(30) Priorität: 01.10.2003 DE 10345684
(43) Veröffentlichungstag der Anmeldung: 06.04.2005
(73) Patentinhaber: MANN + HUMMEL GMBH, 71638 Ludwigsburg (DE)
(72) Erfinder: Maurer, Hermann, 71720, Oberstenfeld (DE); Stotz, Michael, 75242, Neuhausen (DE); Dirnberger, Timo, 71672, Marbach (DE)

(56) Entgegenhaltungen:
- DE-A1- 3 338 653
- JP-A- 4 203 437
- JP-A- 8 093 580
- JP-A- 8 210 201
- JP-A- 2002 188 535

## Beschreibung

### Stand der Technik

Die Erfindung betrifft eine Luftfilteranlage der im Oberbegriff des Patentanspruches 1 genannten Art. Außerdem betrifft die Erfindung ein Verfahren nach Anspruch 10 zum Einbringen eines Luftfilterelementes in eine Luftfilteranlage gemäß Anspruch 1.

Da sich elektronische Steuergeräte im Betrieb aufheizen, wird der kontrollierte Luftstrom auf der Saugseite des Verbrennungsmotors zur Kühlung der elektronischen Steuergeräte genutzt. Dazu werden die elektronischen Steuergeräte derart am Luftfilter befestigt, dass eine wärmeübertragende Oberfläche direkt an den Luftstrom angrenzt.

Es ist aus der EP 0 997 632 eine Luftfilteranlage bekannt, welche aus zwei Kammern besteht. Eine Kammer zur Anbringung eines Filterelementes und eine Kammer zur Anbringung eines elektronischen Steuergerätes. Die beiden Kammern kommunizieren durch zwei Kanäle, die an der angrenzenden Wandung der Kammern eine Verbindung aufweisen. Zum Verschluss der Kammern sind eine Verschlußklappe für die Steuergerätekammer und ein Deckel für die Kammer des Filterelementes erforderlich, wobei am Deckel des Filterelementes ein Reinluftauslass angeordnet ist. Die Verschlußklappe verschließt die Kammer des elektronischen Steuergerätes und dient gleichzeitig zu dessen Fixierung. Zwischen Kammer und Verschlußklappe ist keine Dichtung angeordnet, somit strömt ein Teil der Rohluft über die Oberfläche des elektronischen Steuergerätes zum Filterelement. Die Außenluft wird durch den an der Filterkammer vorhandenen Rohlufteinlass angesaugt und strömt aufgrund der unterschiedlichen Druckverhältnisse, teilweise durch die Verbindungskanäle der Kammer des elektronischen Steuergerätes. Somit werden zwei Luftströmungen erzeugt, die das elektronische Steuergerät kühlen.

Nachteilig hierbei sind der hohe herstellungstechnische Aufwand und der Materialbedarf, welcher durch die Anordnung von zwei Gehäusekammern notwendig ist. Nachteilig ist auch die hohe Anzahl der notwendigen Einzelteile, da jedes Gehäuse einzeln verschlossen wird. Weiterhin ist das Steuergerät auf der Rohluftseite der Luftfilteranlage eingebaut, wodurch eine Verschmutzung zu erwarten ist.

Die Aufgabe der Erfindung besteht darin, die oben genannten Nachteile zu vermeiden und mit geringem Materialaufwand und wenig Einzelteilen eine Luftfilteranlage zu bilden, die einfach und zuverlässig zu montieren ist und die Integration eines elektronischen Steuergerätes ermöglicht.

Diese Aufgabe wird durch die Merkmale der Ansprüche 1 und 10 gelöst.

Die erfindungsgemäße Luftfilteranlage für eine Brennkraftmaschine, insbesondere eines Fahrzeuges, verfügt über ein Gehäuse, in welchem über einen Rohlufteinlass Luft anströmt, einen Reinluftauslass, durch welchen die Luft ausströmt und ein dazwischen liegendes Filterelement, welches vom Luftstrom durchströmt wird. Das Gehäuse weist eine zusätzliche Funktionsöffnung und eine Kontur innerhalb des Gehäuses zur Aufnahme des Filterelementes auf. Die Funktionsöffnung bildet einen Zugang zur Innenseite des Gehäuses, wodurch das Filterelement ausgetauscht werden kann. Das Filterelement ist vorzugsweise ein Flachfilterelement und weist einen elastischen Dichtwulst auf. Der Dichtwulst korrespondiert mit einer innerhalb des Filtergehäuses angeordneten Dichtfläche und stellt eine dichte Verbindung zwischen einer Rohluft- und einer Reinluftseite her.

Ein Funktionselement, welches insbesondere als elektronisches Steuergerät zur Steuerung eines Verbrennungsmotors ausgebildet ist, dient zum Verschluss der Funktionsöffnung. Das plattenförmig gestaltete elektronische Steuergerät verfügt über eine Seite, die außerhalb des Filtergehäuses liegt und an der die zur Funktion notwendigen Elektronikanschlüsse angebracht sind. Auf der innerhalb des Gehäuses liegenden Seite ist die Oberfläche derart gestaltet, dass eine optimierte Wärmeübertragung stattfindet. Dies wird z. B. durch die Anordnung von Kühlrippen, welche die Oberfläche vergrößern, erreicht. Das elektronische Steuergerät bildet somit den Deckel des Luftfiltergehäuses und grenzt an der inneren Seite am Luftstrom an, wodurch eine Kühlung des elektronischen Steuergerätes erreicht wird. Ist das elektronische Steuergerät demontiert, so ist durch die Funktionsöffnung der Zugang zum im Gehäuse liegenden Filterelement frei und das Filterelement kann ausgetauscht werden.

Vorteilhaft ist, dass bei dieser Anordnung keine zusätzlichen Bauteile zum Verschließen des Luftfiltergehäuses und einer Steuergerätekammer erforderlich sind und dadurch auch weniger Teile montiert werden müssen. Weiterhin ist es möglich, das elektronische Steuergerät reinluftseitig anzuordnen und damit eine Verschmutzung der temperaturübertragenden Oberfläche zu vermeiden.

Eine vorteilhafte Anordnung ergibt sich durch die Aufnahme des Filterelementes in einer Kassette. Die Kassette umschließt das mechanisch labile Filterelement an den Seitenflächen und stabilisiert den elastischen Dichtwulst. Dies kann dadurch erreicht werden, dass der Dichtwulst das Filterelements umfangsseitig überragt, wodurch eine Auflagefläche für die Kassette entsteht. Dadurch kann die Kassette den Dichtwulst definiert an eine Dichtfläche des Gehäuses andrücken. Somit bildet die Kassette eine Trägerfunktion des Filterelementes. Die Kassette kann innerhalb des Gehäuses mittels Schraub-, Rast-, oder Clipverbindungen befestigt werden oder durch Nocken, Federn oder Einführschrägen verspannt werden. Als Materialien kommen vorzugsweise Kunststoffe wie Polyamid oder Polypropylen in Frage, es können jedoch auch Metalle verwendet werden. Durch die Kassette wird das Filterelement stabilisiert und die dichtende Befestigung im Gehäuse gewährleistet. Da die Kassette im Wartungsfall nicht ausgetauscht werden muss, sondern nur das einfach gestaltete Filterelement ersetzt wird, ergeben sich günstigere Wartungskosten.

Eine vorteilhafte Weiterbildung der Erfindung ist die Anordnung einer Kontur innerhalb des Luftfiltergehäuses, welche mit dem Filterelement korrespondiert. Die Kontur kann beispielsweise durch Nocken oder Stege gebildet werden, die einstückig mit dem Gehäuse hergestellt sind und an welchen sich die Kassette beim Einbringen oder in eingebautem Zustand abstützt. Die Kontur kann auch eine Vorbefestigung der Kassette dergestalt herstellen, dass die Kassette im Filtergehäuse fixiert, aber noch keine dichte Verbindung hergestellt ist. Die endgültige Befestigung kann zu einem späteren Zeitpunkt z. B. mit der Montage des Steuergerätes erfolgen. In Verbindung mit der beschriebenen korrespondierenden Kontur ergibt sich z. B. die Möglichkeit, die Kassette durch angebrachte Gleitelemente auf schräg oder gestuft zur Dichtfläche verlaufenden Schienen einzuführen und an die Dichtfläche anzuspannen. Hierdurch werden die Einbringung und die Verspannung des Elementes erleichtert.

Eine weitere Ausgestaltung zur Befestigung der Kassette oder des Filterelementes ermöglicht die Anbringung einer Schwenkachse am Filterelement oder an der Kassette. Die Schwenkachse wird dabei in einer gegenüberliegenden Schwenkkontur aufgenommen. Die Schwenkachse kann beispielsweise durch einen zylinderförmigen Nocken und die Schwenkkontur durch einen klauenförmigen Absatz gebildet werden. Die Verbindung zwischen Schwenkachse und Schwenkkontur kann z. B. durch eine Verschnappung rastbar ausgeführt sein. Durch diese Anordnung wird die Einbringung der Kassette bzw. des Filterelementes vorteilhaft erleichtert und es findet eine Positionierung innerhalb des Gehäuses statt.

Vorteilhaft ist die Befestigung des Filterelementes oder der Kassette im Gehäuse durch ein Befestigungselement. Dies kann eine Schraub-, Clip- oder eine rastende Verbindung sein. Beispielsweise kann durch einen gegenüber der Schwenkkontur angebrachten Haken, welcher im Gehäuse eine Aufnahme findet, das Filterelement durch Andrücken an die Dichtfläche fixiert werden. Die Fixierung kann endgültig sein oder zu einem späteren Zeitpunkt beispielsweise durch die Montage des Steuergerätes verstärkt werden. Durch die schwenkbare Befestigung kann aufgrund der Hebelwirkung ein hoher Druck auf die Dichtflächen ausgeübt werden, was zu einer zuverlässigen Dichtwirkung führt.

Eine weitere vorteilhafte Ausgestaltung ist die Befestigung des elektronischen Steuergerätes am Gehäuse. Durch eine an einer Seite des elektronischen Steuergerätes angeordnete Befestigungsachse, welche am Gehäuse eine schwenkbare Aufnahme findet, wird das elektronische Steuergerät auf einer Seite eingebracht und kann auf der gegenüberliegenden Seite eingeschwenkt und mit Befestigungselementen fixiert werden. Auch hierbei ergibt sich eine vorteilhafte Abdichtung, da durch die Hebelwirkung ein hoher Druck auf die Dichtflächen zwischen elektronischem Steuergerät und dem Gehäuse aufgebracht wird. Weiterhin ist eine einfache wirtschaftliche Montage möglich.

Gemäß einer weiteren vorteilhaften Gestaltung sind am elektronischen Steuergerät Druckkörper angebracht, welche in Form von Nocken, Stegen oder Klauen bei der Montage des elektronischen Steuergerätes einen Druck auf das Filterelement übertragen und somit die Abdichtung zwischen Filterelement und Gehäuse herstellen. Hierbei ist es vorteilhaft, am Filterelement oder der Kassette eine korrespondierende Kontur anzubringen, welche den Anpressdruck des elektronischen Steuergerätes aufnimmt und flächig auf die Dichtkontur des Filterelementes ableitet. Als Konturen sind dazu insbesondere Nocken geeignet, die am elektronischen Steuergerät oder am Filterelement bzw. der Kassette angebracht sein können.

Die Druckkörper des elektronischen Steuergerätes und die korrespondierenden Konturen der Kassette können in ihrer Geometrie derart abgestimmt werden, dass sich bei Berücksichtigung aller möglichen Fertigungs- und Montagetoleranzen immer eine Überdeckung der Berührungspunkte ergibt. In Verbindung mit im Gehäuse angebrachten Anlagen kann der Schwenkbereich der Kassette eingegrenzt werden. Hierdurch wird gewährleistet, dass die Nocken des elektronischen Steuergerätes beim Einschwenken in das Gehäuse immer einen Anschlag in der Kassette finden. Da das Filterelement nur an der Dichtfläche anliegt, wenn es sich in übereinstimmender Position zum Gehäuse befindet, wird somit eine fehlerhafte Montage der Kassette ausgeschlossen. Zusätzlich wird durch die Anlagen das Einführen der Kassette in das Gehäuse erleichtert.

Dies ermöglicht eine sehr einfache und günstige Montage des elektronischen Steuergerätes, wodurch die beiden Dichtflächen zwischen Filterelement und Luftfiltergehäuse sowie zwischen elektronischem Steuergerät und Luftfiltergehäuse durch einen Montageablauf hergestellt werden.

Eine vorteilhafte Abdichtung zwischen elektronischem Steuergerät und Luftfiltergehäuse ist die Anordnung einer umlaufenden Dichtung in einer Nut, die die Funktionsöffnung des elektronischen Steuergerätes umschließt. Hierdurch kann die Dichtung bereits vormontiert mit der Luftfilteranlage ausgeliefert werden und erleichtert zusätzlich die Montage des elektronischen Steuergerätes.

Vorteilhaft ist die Anordnung des elektronischen Steuergerätes an einer der Luftströmung zugewandten Seite. Diese Anordnung wird mit der Abstimmung der Luftführungsgeometrie bestimmt und ermöglicht einen optimalen Wärmeaustausch zwischen elektronischem Steuergerät und Luftstrom.

Das erfindungsgemäße Verfahren zum Einbringen eines Filterelementes in die Innenseite eines Luftfiltergehäuses durch eine Funktionsöffnung kennzeichnet sich dadurch, dass die Funktionsöffnung gleichzeitig die Aufnahme eines elektronischen Steuergerätes ermöglicht, welches durch den im Luftfiltergehäuse anliegenden Luftstrom gekühlt wird.

Das Filterelement wird durch die Funktionsöffnung mit der Seite, auf welcher sich eine angebrachte Schwenkachse befindet, ins Luftfiltergehäuse eingebracht. Die Schwenkachse findet im Filtergehäuse eine Aufnahme. Das Filterelement wird an die Dichtfläche angedrückt und über eine Rastung fixiert. Anschließend wird das elektronische Steuergerät mit der Seite, an welcher sich die schwenkbare Befestigungsachse befindet, in die dazu korrespondierende Aufnahmekontur der Befestigungsachse eingeschoben. Das elektronische Steuergerät wird jetzt zum Gehäuse hin geschwenkt und mit den vorgesehenen Befestigungselementen fixiert. Durch das Einschwenken des elektronischen Steuergerätes wird das Filterelement über Spannocken an die Dichtfläche zum Luftfiltergehäuse angedrückt. Gleichzeitig wird das elektronische Steuergerät an die außenliegende Dichtfläche zum Gehäuse angedrückt. Vorteilhaft werden in einem Arbeitsgang sowohl das elektronisches Steuergerät als auch das Filterelement mit der jeweiligen Dichtfläche verspannt. Weiterhin braucht kein zusätzliches Verschlußteil an das Luftfiltergehäuse angebracht werden.

Ein vorteilhafter Effekt des Verfahrens wird dadurch erzielt, dass das im Luftfiltergehäuse montierte Filterelement durch ein Befestigungselement fixiert wird. Dazu bietet sich die Anbringung eines Hakens an der Kassette an, der sich beim Andrücken in einer am Gehäuse vorgesehenen Kante einhakt, wodurch das Filterelement an die vorgesehene Dichtkontur am Gehäuse angedrückt wird. Hierdurch wird das Filterelement in seiner Lage fixiert und kann zu weiteren Montageorten transportiert werden. Insbesondere wird es ermöglicht, die vormontierte Luftfilteranlage dem Kunden auszuliefern, welcher zur Komplettierung nur noch das jeweilige elektronische Steuergerät zu montieren braucht.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: eine Luftfilteranlage im Vollschnitt und
- Figur 2: ein Filterelement in einer Teilansicht.

### Beschreibung der Ausführungsbeispiele

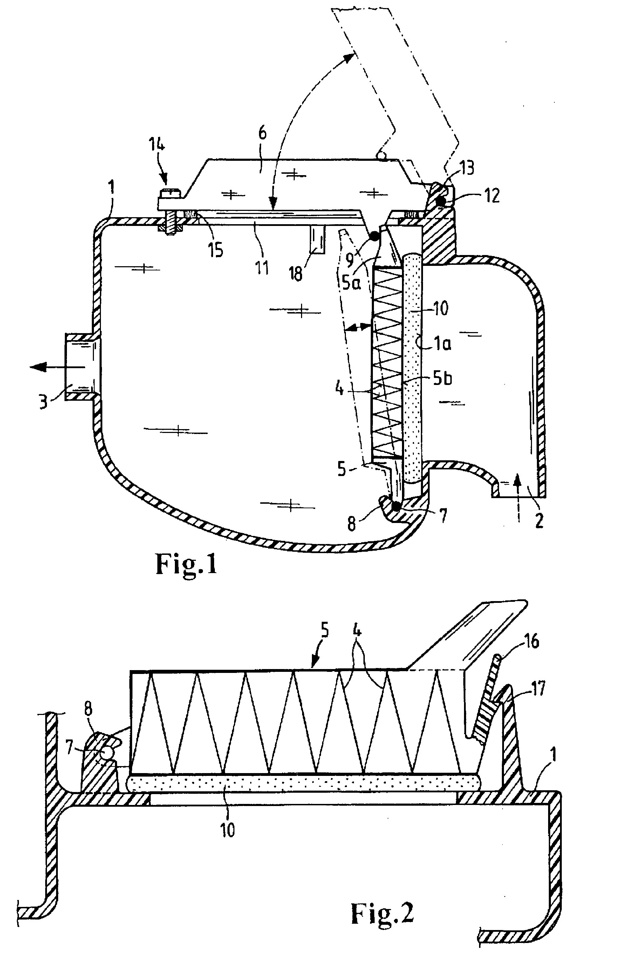

Figur 1 zeigt eine Luftfilteranlage mit einem Gehäuse 1, einem Rohlufteinlass 2 und einem Reinluftauslass 3. In dem Gehäuse 1 ist ein Filterelement 4 angeordnet, welches in eine Kassette 5 eingebracht ist und durch ein elektronisches Steuergerät 6 fixiert ist.

An der Kassette 5 ist eine Schwenkachse 7 vorhanden, welche an einer Schwenkkontur 8 aufgenommen ist. Die Schwenkkontur 8 ist am Gehäuse 1 angebracht. Auf der der Schwenkkontur 8 gegenüber liegenden Seite verfügt die Kassette 5 über eine Nase 5a.

Durch einen Spannocken 9, welcher am elektronischen Steuergerät 6 angebracht ist und mit der Nase 5a korrespondiert, ist die Kassette 5 fixiert. Das Gehäuse 1 verfügt über eine Funktionsöffnung 11, durch welche das Filterelement 4 mit der Kassette 5 in das Gehäuse 1 eingebracht wird. Im Randbereich der Funktionsöffnung 11 verfügt das Gehäuse 1 über Anlagen 18, welche in das Innere des Gehäuses 1 hineinragen. Die Anlagen 18 sind beidseitig der Funktionsöffnung 11 angeordnet, wobei Anlagenasen 5a der Kassette 5 in unverspanntem Zustand, z. B. beim Transport des vormontierten Filterelementes 4, an den Anlagen 18 anliegen. Hierbei befindet sich das Filterelement 4 noch nicht in der zur Filtration erforderlichen Lage. Das Filterelement 4 wird vom Rahmen der Kassette 5 umschlossen und mit einer Kante 5b der Kassette 5 über einen Dichtwulst 10 auf eine Dichtfläche 1a des Gehäuses 1 angedrückt. Hierbei ist der Dichtwulst 10 an dem Filterelement 4 bzw. der Kassette 5 angeordnet. Bei alternativen Ausgestaltungen kann der Dichtwulst 10 auch am Gehäuse 1 angeordnet sein. Das in die Funktionsöffnung 11 montierte elektronische Steuergerät 6 ist in einer Befestigungsachse 12 durch am Gehäuse 1 angebrachte Klauen 13 aufgenommen und auf der gegenüberliegenden Seite mittels einer Schraubverbindung 14 an dem Gehäuse 1 fixiert. Zwischen dem Gehäuse 1 und dem Steuergerät 6 ist eine umlaufende Dichtung 15 angeordnet, welche die Abdichtung zwischen Gehäuse 1 und elektronischem Steuergerät 6 gewährleistet. Beim Einschwenken des elektronischen Steuergerätes 6 wird die Kassette 5 und somit das Filterelement 4 durch Spannocken 9, welche am Steuergerät 6 angeordnet sind, gegen den Dichtwulst 10 gepresst und somit in dem Gehäuse 1 dichtend fixiert.

Figur 2 zeigt das Filterelement 4, welches durch eine Rastverbindung zwischen Kassette 5 und Gehäuse 1 befestigt ist. Der Figur 1 entsprechende Bauteile sind mit gleichen Bezugszeichen versehen. Gegenüber der zwischen Schwenkachse 7 und Schwenkkontur 8 gebildeten Schwenkverbindung ist an der Kassette 5 ist ein Hakenbügel 16 angeordnet, welcher mit einem Rastelement 17 des Gehäuses 1 korrespondiert. Hakenbügel 16 und Rastelement 17 sind biegeelastisch und bilden eine lösbare Rastverbindung. Bei anderen Ausgestaltungen kann das Rastelement 17 auch durch eine, in Richtung Hakenbügel 16 ragende Gehäusekante gebildet werden (nicht dargestellt). Die gezeigte Rastverbindung eignet sich beispielsweise als Transportsicherung des im Gehäuse 1 vormontierten Filterelementes 4. Die endgültige Abdichtung der Verbindung erfolgt durch das Einschwenken des Steuergerätes 6 gemäß Figur 1 und den dadurch an das Gehäuse 1 angepressten Dichtwulst 10.

## Patentansprüche

1. Luftfilteranlage für eine Brennkraftmaschine, aufweisend ein Gehäuse, einen Rohlufteinlass, einen Reinluftauslass, ein dichtend zwischen Rohlufteinlass und Reinluftauslass angeordnetes Filterelement und eine zusätzliche Funktionsöffnung im Gehäuse, wobei das Filterelement durch die Funktionsöffnung in das Gehäuse einbringbar ist, **dadurch gekennzeichnet, dass** die Funktionsöffnung des Gehäuses durch ein Funktionselement verschließbar ist, wobei das Funktionselement ein elektronisches Ste u-ergerät ist.

2. Luftfilteranlage nach Anspruch 1, **dadurch gekennzeichnet, dass** das Filterelement in einer Kassette angeordnet ist, welche durch die Funktionsöffnung in das Gehäuse einbringbar ist.

3. Luftfilteranlage nach einem der vorhergehenden Ansprüche, **dadurch gekennzeichnet, dass** das Gehäuse eine Kontur aufweist, durch welche das Filterelement positioniert wird.

4. Luftfilteranlage nach einem der vorhergehenden Ansprüche, **dadurch gekennzeichnet, dass** das Filterelement oder die Kassette auf einer Seite schwenkbar montiert ist.

5. Luftfilteranlage nach einem der vorhergehenden Ansprüche, **dadurch gekennzeichnet, dass** das Filterelement oder die Kassette im Gehäuse durch wenigstens ein Befestigungselement lösbar mit dem Gehäuse verbunden ist.

6. Luftfilteranlage nach einem der vorhergehenden Ansprüche, **dadurch gekennzeichnet, dass** das Funktionselement auf einer Seite schwenkbar montiert ist und auf der gegenüberliegenden Seite lösbar mit dem Gehäuse verbunden ist.

7. Luftfilteranlage nach einem der vorhergehenden Ansprüche, **dadurch gekennzeichnet, dass** am Funktionselement und / oder an der Kassette bzw. dem Filterelement Druckkörper angebracht sind, die beim Befestigen des Funktionselementes einen Anpressdruck auf das Filterelement ausüben, wodurch eine Verpressung zwischen Gehäuse und Filterelement hergestellt ist.

8. Luftfilteranlage nach einem der vorhergehenden Ansprüche, **dadurch gekennzeichnet dass** zwischen Gehäuse und Funktionselement eine umlaufende Dichtung angeordnet ist.

9. Luftfilteranlage nach einem der vorhergehenden Ansprüche, **dadurch gekennzeichnet, dass** das elektronische Steuergerät an der Innenseite des Gehäuses an einer der Luftströmung zugewandten Seite angeordnet ist.

10. Verfahren zur Wartung einer Luftfilteranlage gemäß Anspruch 1 bis 9, aufweisend zumindest folgende Arbeitsschritte:
- Öffnen der Funktionsöffnung durch Entfernen des Funktionselementes,
- Entfernen des Filterelementes aus dem Gehäuse durch die Funktionsöffnung,
- Einbringen des neuen Filterelementes durch die Funktionsöffnung,
- Verschließen der Funktionsöffnung durch das Funktionselement.

## Claims

1. Air filter system for an internal combustion engine, featuring a housing, a dirty air intake, a clean air outlet, a filter element disposed sealingly between dirty air intake and clean air outlet and an additional functional opening in the housing, the filter element being insertible through the functional opening into the housing, **characterized in that** the functional opening of the housing is closable by a functional element, the functional element being an electronic control unit.

2. Air filter system according to claim 1, **characterized in that** the filter element is disposed in a cassette which is insertible through the functional opening into the housing.

3. Air filter system according to one of the above claims, **characterized in that** the housing features a contour by which the filter element is positioned.

4. Air filter system according to one of the above claims, **characterized in that** the filter element or the cassette is mounted pivotably on one side.

5. Air filter system according to one of the above claims, **characterized in that** the filter element or the cassette in the housing is connected detachably with the housing by at least one fixing element.

6. Air filter system according to one of the above claims, **characterized in that** the functional element is mounted pivotably on one side and connected detachably with the housing on the opposite side.

7. Air filter system according to one of the above claims, **characterized in that** at the functional element or at the cassette resp. the filter element pressure bodies are attached which exert a contact pressure to the filter element during attachment of the functional element, whereby a compression is realized between housing and filter element.

8. Air filter system according to one of the above claims, **characterized in that** between housing and functional element a circumferential sealing is disposed.

9. Air filter system according to one of the above claims, **characterized in that** the electronic control unit on the interior side of the housing is disposed on a side facing the air flow.

10. Method for the maintenance of an air filter system according to the claims 1 to 9, featuring at least the following operations:
- Opening of the functional opening by removing the functional element,
- Removal of the filter element from the housing through the functional element,
- Insertion of the new filter element through the functional opening,
- Closing of the functional opening by the functional element.

## Revendications

1. Installation de filtration d'air pour un moteur à combustion interne, présentant un carter, une entrée d'air brut, une sortie d'air pur, un élément filtrant disposé de façon étanche entre l'entrée d'air brut et la sortie d'air pur et un orifice fonctionnel supplémentaire dans le carter, l'élément filtrant pouvant être introduit dans le carter par l'orifice fonctionnel, **caractérisé en ce que** l'orifice fonctionnel du carter peut être obturé par un élément fonctionnel, l'élément fonctionnel étant un appareil de commande électronique.

2. Installation de filtration d'air selon la revendication 1, **caractérisée en ce que** l'élément filtrant est disposé dans une cassette qui peut être introduite dans le carter par l'orifice fonctionnel.

3. Installation de filtration d'air selon l'une des revendications précédentes, **caractérisée en ce que** le carter présente un contour par lequel l'élément filtrant est positionné.

4. Installation de filtration d'air selon l'une des revendications précédentes, **caractérisée en ce que** l'élément filtrant ou la cassette peut être monté(e) d'un côté de manière pivotante.

5. Installation de filtration d'air selon l'une des revendications précédentes, **caractérisée en ce que** l'élément filtrant ou la cassette dans le carter est relié de manière amovible au carter par au moins un élément de fixation.

6. Installation de filtration d'air selon l'une des revendications précédentes, **caractérisée en ce que**, d'un côté, l'élément fonctionnel est monté de manière pivotante et, du côté opposé, est relié de manière amovible au carter.

7. Installation de filtration d'air selon l'une des revendications précédentes, **caractérisée en ce que** des éléments de pression sont montés sur l'élément fonctionnel et/ou sur la cassette ou sur l'élément filtrant, lesquels exercent une pression de contact sur l'élément de pression lors de la fixation de l'élément fonctionnel, ce qui génère une compression entre le carter et l'élément filtrant.

8. Installation de filtration d'air selon l'une des revendications précédentes, **caractérisée en ce qu'**un joint circulaire est disposé entre le carter et l'élément fonctionnel.

9. Installation de filtration d'air selon l'une des revendications précédentes, **caractérisée en ce que** l'appareil de commande électronique sur la face intérieure du carter est disposé d'un côté orienté vers le flux d'air.

10. Procédure d'entretien d'une installation de filtration d'air selon les revendications 1 à 9, comprenant au moins les opérations suivantes :
- ouverture de l'orifice fonctionnel par retrait de l'élément fonctionnel,
- retrait de l'élément fonctionnel du carter à travers l'orifice fonctionnel,
- introduction du nouvel élément filtrant à travers l'orifice fonctionnel,
- fermeture de l'orifice fonctionnel par l'élément fonctionnel.
